# EUROPEAN PATENT SPECIFICATION

(11) **EP 1 946 942 B1**
(45) Date of publication and mention of the grant of the patent: **23.05.2012**
(21) Application number: 06811040.2
(22) Date of filing: 02.10.2006
(51) Int. Cl.: B60C 11/04, B60C 5/00, B60C 11/13

(54) **PNEUMATIC TIRE FOR FRONT WHEEL OF BICYCLE, AND PNEUMATIC TIRE FOR REAR WHEEL OF BICYCLE**
LUFTREIFEN FÜR DAS VORDERRAD EINES FAHRRADS UND LUFTREIFEN FÜR DAS HINTERRAD EINES FAHRRADS
PNEU DE ROUE AVANT ET PNEU DE ROUE ARRIERE D'UNE BICYCLETTE

(30) Priority: 03.10.2005 JP 2005290290
(43) Date of publication of application: 23.07.2008
(73) Proprietor: Bridgestone Corporation, Tokyo 104-8340 (JP)
(72) Inventor: ISHIYAMA, Makoto c/o BRIDGESTONE CORPORATION, Kodaira-shi, Tokyo 187-8531 (JP)
(74) Representative: Oxley, Robin John George
(86) International application number: PCT/JP2006/319692
(87) International publication number: WO 2007/040200

(56) References cited:
- JP-A- 02 133 206
- JP-A- 07 329 514
- JP-A- 10 067 207
- JP-A- 10 081 111
- JP-A- 11 208 218
- JP-A- 2003 211 917
- JP-U- 62 174 905

## Description

### TECHNICAL FIELD

The present invention directs to a pneumatic tire for a front wheel of a motorcycle and to a pneumatic tire for a rear wheel of a motorcycle, and in particular, relates to a pneumatic tire for a front wheel of a motorcycle and to a pneumatic tire for a rear wheel of a motorcycle both capable of improving turning performance on a wet road surface.

### RELATED ART

A tire has grooves arranged at its tread portion in order to secure preferable a ground-contact between a road surface and rubber on a tread surface without being hindered by a water film, when a drive is performed on a wet road surface (for example, refer to Japanese Patent Application Laid-open No. 2003-211917).

In other words, each of the grooves arranged at a tire tread portion serves to be an escape route of water squeezed by a tread and the road surface, and to efficiently drain the water. A tire for a motorcycle is also disclosed in JP-A-11-208218.

Meanwhile, the grooves arranged at the tread divide the tread into blocks of lands, thereby decreasing tread rigidity. Accordingly, the tread is subjected to shear deformation to lean, when the surface of the tire contacts the road surface and braking force, driving force, or lateral force applies to the tread. When such leaning occurs, the tread itself is likely to move, and a rider feels instability of the tire. At the same time, the leaning of the tread causes the tread surface to partly lift from the road surface, and accordingly, a ground-contact area decreases, which lowers grip. This may also occur on a wet road surface. A commercial tire requires being driven both on a wet road and on a dry road, leading to a major issue even on a dry road. Such lifting of the block from the road surface also triggers uneven wear, so that the lifting is considered as a major issue.

An arrangement of grooves in a tread pattern of a motorcycle is a technical difficulty and a major factor affecting wet performance.

Therefore, the pattern of a tire is determined while suitably redressing balance between a groove arrangement capable of efficiently draining water as well as avoiding degradation of rigidity of the tread and aesthetic design or the like.

Further, a tire for a motorcycle has a characteristic that unlike tires for a passenger vehicle or a truck, its vehicle body is tilted to turn, so that portions of the tread to be contact with a ground are different between during a straight drive when the vehicle body is not tilted and during a cornering when the vehicle body is tilted. Therefore, a tire for a motorcycle may be given features of patterns for a central side and a shoulder side.

In other words, the grooves at the central side are arranged in such a manner that the tread reveals strength against input in a back-and-forth direction of a tire (i.e. an equatorial direction or a circumferential direction). The grooves at the shoulder side are arranged such that the tread reveals strength against input in a width direction of a tire (lateral force) as well as to input (traction, a brake) in a circumferential direction of a tire.

In light of the fact that the vehicle body is tilted to turn, lateral force is mainly applied to the shoulder side while the vehicle body turns at a fixed velocity without opening a throttle or applying a brake, and driving force is applied while the vehicle body is accelerated after turning at a fixed velocity. In other words, both lateral force and driving force are applied to the shoulder side. The shoulder side, thus, needs to have a pattern having strength for both lateral force and driving force.

Particularly, a motorcycle race puts importance especially on steering stability performance during turning.

During a cornering under a wet condition, a tire having low wet turning performance cannot increase speed to shorten a lap time. Further, also with regard to a commercially available vehicle, a tire having low wet turning performance on a general road is likely to slip.

### DISCLOSURE OF THE INVENTION

The present invention has been achieved in order to solve the above-described problem. It is a first object of the present invention to improve turning performance on a wet road surface in a pneumatic tire for a front wheel of a motorcycle and in a pneumatic tire for a rear wheel of a motorcycle compared with that in a conventional tire. Further, it is a second object to improve turning performance also on a dry road surface in a tire for a general public road.

A tire is provided with grooves arranged at its tread portion in order to ensure good ground-contact state between a road surface and rubber on a tread surface without being hindered by a water film, when the tire is driven on a wet road surface. In other words, each of the grooves arranged at a tire tread becomes an escape route of water squeezed by the tread and the road surface, and has a role to efficiently drain the water.

On the other hand, the grooves arranged at the tread divide the tread into blocks of small lands, so that tread rigidity decreases. Accordingly, a land portion is subjected to shear deformation to lean, when braking force, driving force, or lateral force applies thereto in a state of being contact of the tire surface with the road surface. When such leaning occurs, the tread itself is likely to move, which makes a rider feel anxiety about the tire. At the same time, the leaning of the tread causes the tread surface to partly lift from the road surface, and accordingly, a ground-contact area decreases. Therefore, grip is lowered. This is a major issue also on a wet road. Further, such lifting of the block from the road surface also triggers uneven wear, so that the floating is considered as a major problem.

An arrangement of grooves in a pattern of a motorcycle is a technical difficulty and a major affecting wet performance. Therefore, a pattern of a tire is determined while suitably redressing balance between a groove arrangement capable of efficiently draining water and one capable of avoiding degradation of rigidity of the tread.

Further, a tire for a motorcycle has a characteristic unlike tires for a passenger vehicle or a truck, its vehicle body is tilted to turn, so that portions of the tread to be contact with a ground are different between during a straight drive when the vehicle body is not tilted and during a cornering when the vehicle body is tilted. Therefore, a tire for a motorcycle may be given features of patterns for a central side and at a shoulder side. In other words, the grooves at the central side are arranged in such a manner that the tread reveals strength against input in a back-and-forth direction of a tire (i.e. a tire equatorial direction or a tire circumferential direction) as well as to input in a circumferential direction of a tire. Accordingly, grooves each having an angle close to a direction along a tire equatorial plane are often arranged at the central side of the tread. Lateral force is applied to the shoulder side of the tread, so that grooves each having an angle close to a direction along that of this force, in other words, a direction close to 90 degrees relative to the tire equatorial plane (a tire width direction) are often arranged at the shoulder side of the tread (needless to say, the groove "in a direction along the tire equatorial plane at the central side of the tread, in a direction along a tire width direction at the shoulder side" is a concept which absolutely places priority on a function, but actually, the groove arrangement is determined also in consideration of design of a tire, so that all tires do not always have such groove arrangement).

An attention is paid to the central side of the tread. The central side is used when a motorcycle is in an upright position. At this time, applied to a tire are only of traction (driving force) during acceleration and a brake (braking force) during decelerating. Substantially no force from a lateral direction is applied thereto. Therefore, the central side of the tread preferably has a pattern configuration strength in an equatorial direction of a tire. In other words, an arrangement of the grooves, each of which has a direction close to that of the tire equatorial plane at the central side of the tread, can provide a tire having an excellent grip performance.

Next, an attention is focused on the shoulder side of the tread. The shoulder side contacts with the road surface when the vehicle body tilts to turn. Therefore, a pattern at the shoulder side is important in turning. A tire for a motorcycle generates lateral force due to camber thrust, so that lateral force is mainly applied to the shoulder side of a tire. Therefore, each of the grooves at the shoulder side is preferably in a direction close to a tire width direction perpendicular to the tire equatorial plane. The groove mainly in a width direction within a range of 45-90 degrees relative to the tire equatorial plane exerts strength against lateral force, so that such groove is preferable. However, force in a back-and-forth direction, other than genuine lateral force, may also be applied to the shoulder side of the tread. When a motorcycle is decelerated on a straight line to enter into a corner, braking is applied while the vehicle body is tilted. Accordingly, braking force in addition to lateral force is also applied to the shoulder side of a tire. When the motorcycle turns at a predetermined speed without opening a throttle and applying a brake, lateral force is mainly applied thereto. However, when the motorcycle is accelerated in such state, driving force is applied thereto.

Even when the motorcycle is accelerated, a throttle is opened in a state where the vehicle body tilts. Therefore, acceleration force is applied in a state where the shoulder side of the tread contacts with the road surface to generate lateral force. In other words, back-and -forth force as well as lateral force acts on the shoulder side of the tread (a motorcycle dose not always complete braking in its upright position, but an action to apply a brake while tilting its vehicle body may also be happened. Therefore, a brake may be applied in a state where the vehicle body tilts. Further, also in acceleration, a throttle is opened in a state where the vehicle body is tilted. Therefore, traction may be applied in a state where the vehicle body is tilted, that is, in a state where the shoulder side of the tread is in contact with the ground.).

Furthermore, a motorcycle has features that driving torque acts only on a rear wheel, and that pitching (a behavior where the front side of the vehicle body sinks down) occurs where the front wheel of the motorcycle sinks down during braking to increase a load which acts on the front wheel, thereby decreasing a load which acts on the rear wheel, so that the front wheel proactively contributes to braking. In other words, lateral and braking force are applied to the front wheel, but engine torque is not transmitted thereto, whereby driving force dose not act thereon. In contrast, lateral and driving force are applied to the rear wheel, but only significantly small braking force is applied thereto compared with driving force. In this wise, a motorcycle, which always has a rear-wheel drive configuration, has a more distinct role in its front and rear wheels compared with that of a four-wheeled motor vehicle.

The central side of the tread requires a pattern revealing strength in braking of a front wheel and that revealing strength in driving force of a rear wheel. The shoulder side of the tread requires a pattern revealing strength in lateral and braking force of a front wheel, and that revealing strength in lateral and driving force of a rear wheel.

Particularly, in a motorcycle race, steering stability during turning is especially important. During a cornering under a wet condition, a tire having low wet turning performance cannot increase speed to shorten a lap time. Further, also with regard to a commercially available tire, one having low wet turning performance on a general road is likely to slip.

On the other hand, for a more commonly available vehicle, as described above, a tire for a commercial vehicle has to run both under wet and dry conditions, thereby putting importance on steering stability such as a brake or traction on a dry road surface having a higher friction coefficient as well as performance under a wet condition. A dry road surface puts importance especially on rigidity of a pattern.

As described above, in terms of the shoulder side of the motorcycle, a tire having good grip relative to lateral braking force and one having good grip relative to lateral and driving force are required for its front and rear wheels, respectively.

In consideration of the characteristics of the vehicle body, driving force is applied only to a rear wheel. Therefore, a rear wheel requires gripping with respect especially to driving force. On the other hand, driving force is not applied to a front wheel, but the weight of the vehicle body is applied to the front wheel during braking. Accordingly, large braking force is applied to the tire. The front wheel, thus, necessitates grip in a back-and-forth direction, which resists a brake, and grip in a lateral direction, which resists lateral force.

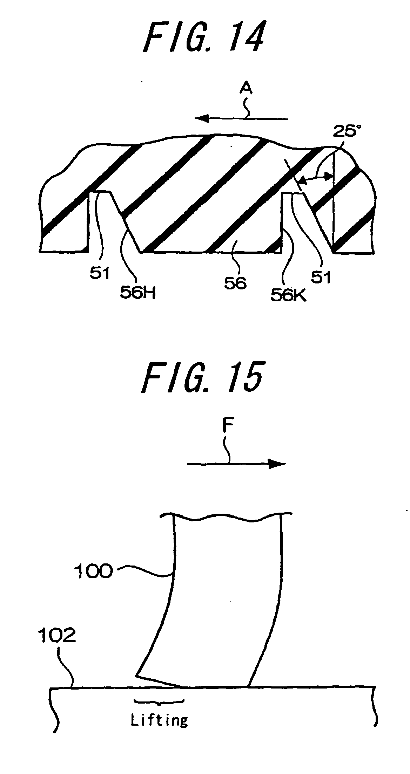

An attention is now paid to wet performance in turning of a vehicle. The shoulder side of the tread contacts with a road surface. In consideration of a groove shape at the shoulder side of the tread, if any groove is not arranged, drainage performance cannot be secured. Therefore, grooves need to be arranged thereat. The reason why is that if not so many grooves are arranged at a land portion, water becomes hard to flow, leading to a possibility to cause a hydroplaning phenomenon. However, when grooves are arranged, tread rigidity is lowered, and accordingly, the tread reveals softness to lose its rigidity. At the same time, as shown in FIG. 15, a leaned land portion 100 partly lifts from a road surface 102 to decrease a ground-contact area, thereby lowering grip performance.

In other words, in a tire where grooves are arranged thereon, securing tread rigidity (avoiding the leaning of the land portion) is important object. Here, force in the lateral direction is dominantly applied to the central side of the tire, but force in the back-and-forth force is also applied thereto. Thus, the above-mentioned object cannot be achieved by the direction of the groove alone. For this reason, a development is required where the shoulder side is configured such that the grooves are directed in a direction close to a lateral direction (tire width direction) of 45-90 degrees relative to a tire equatorial plane to be capable of resisting lateral force, and at the same time, when force in the back-and-forth force is applied thereto, an inclining behavior of the land portion surrounded by grooves could be suppressed as much as possible. The present inventor diligently researched a method for decreasing a phenomenon where the land portion at the shoulder side having an inclination close to a tire width direction along lateral force leaned in a back-and-forth direction when force in a back-and-forth force (braking force, driving force) was applied thereto. As a result, the inventor found a shape in a depth direction of each groove, which was capable of improving turning performance on a wet road surface.

The invention according to claim 1 has been achieved in view of the above-mentioned fact, and is a pneumatic tire for a front wheel of a motorcycle having a plurality of land portions defined by a plurality of grooves at a tread, characterized in that a tread central region extends across a width of 40% of a developed width of the tread with a tire equatorial plane being as its center, and a tread shoulder region extends from an edge portion of the tread toward the tire equatorial plane side across a width of 20% of the developed width, the tread central region is provided with grooves each having an angle set within a range of 0-30 degrees relative to the tire equatorial plane; the tread shoulder region is provided with grooves each having an angle set within a range of 45-90 degrees relative to the tire equatorial plane; and at the tread shoulder region, a wall surface at a trailing side of a land portion defined by the grooves is parallel to a tire radial direction, or inclines in a direction such that a groove width increases from a groove bottom toward a groove opening, a wall surface at a leading side of the land portion inclines in a direction such that a groove width increases from the groove bottom toward the groove opening, and at least a portion at a tread surface side has a larger angle with respect to a tire radial direction than an angle of the wall surface at the trailing side and an angle with respect to a tire radial direction within a range of 10-45 degrees.

Next, operations of the pneumatic tire for a front wheel of a motorcycle according to claim 1 will be explained. First, the reason is described as follows on which, the tread central extends across a width of 40% of a developed width of the tread with the tire equatorial plane being as its center, and the tread central region is provided with grooves each having an angle set within a range of 0-30 degrees relative to the tire equatorial plane.

In a typical tire for a motorcycle, a ground-contact portion of the tire is approximately within a range of one fifth to one sixth of a tread developed width, and "40%" corresponds to twice as much as an average ground-contact width of the tire. Not only when the motorcycle is completely in its upright position, but when the motorcycle slightly tilts, substantially no lateral force is applied thereto, and force in a back-and-forth direction becomes a main constituent. Therefore, the tread central region is 40% region with a slight additional range. Further, the reason why the angle of the groove relative to the tire equatorial plane is set within a range of 0-30 degrees is described as follows. For example, when the angle is 30 degrees, a case can be estimated where the groove may continue in a circumferential direction while folding at an angle of 30 degrees in a zigzag state, or the like. Further, the angle is equal to or less than 30 degrees, so that the groove has a pattern sufficiently revealing strength against force in the equatorial plane.

Next, the reason is described as follows on which the tread shoulder region extends from the edge portion of the tread toward the tire equatorial plane side across a width of 20% of the developed width; the tread shoulder region is provided with the grooves each having an angle set within a range of 45-90 degrees relative to the tire equatorial plane; the wall surface at the trailing side of the land portion defined by the grooves is parallel to a tire radial direction, or inclines in a direction such that the groove width increases from the groove bottom toward the groove opening; the wall surface at a leading side of the land portion inclines in a direction such that the groove width increases from the groove bottom toward the groove opening; and at least a portion at the tread surface side has a larger angle with respect to a tire radial direction than the angle of the wall surface at the trailing side, and an angle with respect to a tire radial direction within a range of 10-45 degrees.

It should be noted that the term "leading side" as used herein means a side which first contacts with a road surface among the wall surfaces of the land portion, whereas the term "trailing side" as used herein means a side which lastly departs from the road surface among the wall surfaces of the land portion when the land portion departs from the road surface due to rotation from a state where the land portion is in contact with the road surface.

Among regions on the tread, a region which is used when a vehicle body is tilted largely to some extent (more specifically, when an inclination angle of a motorcycle during turning is tilted at an angle of 40-55 degrees in a lateral direction with respect to a vertical direction) is the tread shoulder region. In other words, given that a region which is used in tilting the vehicle body largely to some extent is the tread shoulder region, when an angle of the groove at this portion is equal to or more than 45 degrees, its pattern reveals strength against force in a lateral direction of a tire. 45 degrees is an angle that reveals strength against just equally in both the lateral and equatorial directions. An excess of the angle over 45 degrees means to arrange grooves so as to reveal strength relative to the force in the lateral direction.

When an attention is paid to the tread shoulder region of a tire, braking force other than lateral force is applied to a front wheel. An attention is now focused on deformation of tread rubber in the front wheel during braking. When the tire is viewed from immediately lateral, the tread in contact with a road surface during braking is subjected to shear deformation on a cross-section in the equatorial direction where its tread surface displaces backwardly in the traveling direction of the motorcycle, and a portion in contact with a belt which is an internal structural member displaces forwardly in a proceeding direction.

When a motorcycle is in an upright position, substantially no lateral force acts on the motorcycle, and only braking force in a back-and-forth force acts thereon. Therefore, the tread portion does not substantially deform in the width direction, but is subjected to large shear deformation in the tire equatorial direction. When grooves are arranged at the tread in the width direction, the land portion surrounded by the respective grooves is subjected to such shear deformation in a back-and-forth direction (in an equatorial direction) to lean.

In other words, as shown in FIG. 15, the leaning corresponds to one where the tread surface portion of the land portion 100 in contact with the road surface 102 displaces backwardly in the traveling direction of the motorcycle (in the direction of the arrow F) and a deep portion of the land portion 100 displaces forwardly in the traveling direction. This leaning causes a phenomenon where the leading side of the land portion 100 partly lifts from the road surface 102. As shown in FIG. 15, when the land portion 100 partly lifts from the road surface 102, the tread cannot sufficiently transmit force, thereby lowering grip force.

In order for the land portion to resist this lifting, the land portion preferably has an inclination in a groove-depth direction (groove wall angle) which is opposed to the direction of the leaning. In other words, in terms of the land portion, it is preferred that the side surface of the land portion which firstly contacts with the road surface when a tire rotates, that is, the side surface at the leading side has an angle (with respect to the tire radial direction).

Further, when the motorcycle enters into a corner after a straight drive, the motorcycle applies braking while tilting its vehicle body. Therefore, the grooves at the center of the tire are preferably arranged in a shape along the equatorial direction in case the motorcycle is in an almost upright position, and the side wall at the tread shoulder region preferably has an angle in case a brake is still applied even in a state where the vehicle body is largely tilted.
Especially at the tread central region, when grooves in the equatorial direction are arranged thereat, the land portion infinitely continues in the equatorial direction with respect to an input in the back-and-forth force (in this case, a brake). Therefore, there is no possibility where the tread central region may tilt.

To the contrary, the tread shoulder region needs to have a pattern revealing strength against lateral force first. Therefore, grooves extending in a width direction are arranged thereat, and an angle of the side wall of the land portion deals with the leaning in the back-and-forth direction (equatorial direction) of the tire. Lateral force is applied to the tread shoulder region when a vehicle body tilts, so that it is effective to arrange grooves extending in a lateral-force direction. At the same time, in order to deal with braking force, it is especially effective for shear deformation in the circumferential direction of the land portion when braking force acts on to lean the side wall at a leading side of the land portion defined by the grooves in a direction such that its groove width increases from a groove bottom toward a groove opening, to set an angle relative to a tire radial direction of at least a portion at the tread surface side larger than that of the side wall at a trailing side, and to set the angle relative to the tire radial direction within a range of 10-45 degrees, whereby an edge of the land portion can be prevented from lifting attributable to the shear deformation. This makes it possible to secure a contact area with a road surface and, in combination with drainage performance by means of grooves, to improve turning performance on a wet road compared with a conventional case. In addition, turning performance on a dry road can also be improved.

Here, if the angle of the portion at the tread surface side is less than 10 degrees, the effect for the shear deformation is too small. On the other hand, if the angle of the portion at the tread surface side exceeds 45 degrees, the effect for suppressing the lifting dose not increase but hits a peak. At the same time, the groove volume unnecessary decreases, leading to lowering of drainage effect. Therefore, it is adequate for the angle of the side wall of the land portion at the leading side to be set within a range of 10-45 degrees.

Note that in the present invention, the reason why the angle of the side wall of the land portion is set large relative to the tire radial direction is to enhance rigidity of the land portion. In the present invention, setting the angle of the side wall of the land portion large relative to the tire radial direction means to incline the side wall of the land portion with the edge portion at the tread surface side of the land portion as a reference position, and setting the angle of the side wall of the land portion large means that a volume at the root side of the land portion increases and that the groove width decreases at the groove bottom side. As mentioned above, the increase in the volume at the root side of the land portion suppresses the tilting deformation of the land portion.

Further, in the present invention, a groove formed at the tread shall not include sipes each having a narrow width such that it closes within a ground-contact surface.

The invention recited in claim 2 is a pneumatic tire for a front wheel of a motorcycle according to claim 1, wherein the wall surface of the land portion at a trailing side of the land portion inclines at an angle equal to or less than 20 degrees with respect to the tire radial direction.

Next, operations of the pneumatic tire for a front wheel of a motorcycle according to claim 2 will be explained.

The angle of the wall surface of the land portion at the trailing side with respect to the tire circumferential direction is equal to or less than 20 degrees, whereby a vulcanized pneumatic tire for a front wheel may be easily pulled out from a vulcanization mold and the pneumatic tire for a front wheel according to the present invention can be efficiently manufactured. Further, if the angle of the wall surface of the land portion at the trailing side with respect to the tire circumferential direction exceeds 20 degrees, the volume of the groove portion unnecessarily decreases. Accordingly, drainage effect is lowered, whereby a hydroplaning phenomenon is likely to occur. The wall surface of the land portion at the trailing side, which does not so much affect suppression of the lifting of the land portion during braking, is not unnecessarily provided with a large angle, but preferably has an angle equal to or less than 20 degrees.

The invention recited in claim 3 is a pneumatic tire for a front wheel of a motorcycle according to claim 1 or 2, wherein the groove width of the respective grooves arranged at the tread shoulder region is within a range of 3-10 mm.

Next, operation of the pneumatic tire for a front wheel of a motorcycle according to claim 3 will be explained. The reason why the groove width of the respective grooves arranged at the tread shoulder region is equal to or more than 3 mm is that if the groove width is less than 3 mm, a portion at the groove bottom cannot secure enough width in inclining the side wall of the land portion. In other words, it is geometrically impossible that an angle of 20 degrees relative to the tire radial direction is provided with the side wall of the land portion, for example, with the groove width of 2mm (measured at the opening) and the groove depth of 6mm. That is, without a certain level of the groove width, the side wall of the land portion cannot be provided with a large angle. On the other hand, the reason why the groove width is equal to or less than 10mm is that if the groove width exceeds 10 mm, a region of the groove is too wide, thereby deceasing a ground-contact area of the land portion other than the groove (in addition, rigidity of the land portion may be lacking). A groove beyond 10 mm, thus, is not realistic.

The invention according to claim 4 is a pneumatic tire for a rear wheel of a motorcycle having a plurality of land portions defined by a plurality of grooves at a tread and is characterized in that a tread central region extends across width of 40% of a developed width of the tread with a tire equatorial plane being as its center, and a tread shoulder region extends from an edge portion of the tread toward the tire equatorial plane side across a width of 20% of the developed width, the tread central region is provided with grooves each having an angle set within a range of 0-30 degrees relative to the tire equatorial plane; the tread shoulder region is provided with grooves each having an angle set within a range of 45-90 degrees relative to the tire equatorial plane; and at the tread shoulder region, a wall surface at a leading side of a land portion defined by the grooves is parallel to a tire radial direction, or inclines in a direction such that a groove width increases from a groove bottom toward a groove opening; a wall surface at a trailing side of the land portion inclines in a direction such that a groove width increases from the groove bottom toward the groove opening; and at least a portion at a tread surface side has a larger angle with respect to a tire radial direction than an angle of the wall surface at the leading side and an angle with respect to a tire radial direction within a range of 10-45 degrees.

Next, operation of the pneumatic tire for a rear wheel of a motorcycle according to claim 4 will be explained.

In the pneumatic tire for a rear wheel of a motorcycle according to claim 4, the wall surface is provided with an angle opposed to that of the pneumatic tire for a front wheel of a motorcycle according to claim 1. This is because the front wheel receives braking force while the rear wheel receives more traction (driving force: force in a reverse direction compared with braking force) than brake force. The wall surface is, thus, provided with the angle opposed to that of the front wheel. Further, as with the case with claim 1, the respective grooves formed at the tread shall not include sipes each having a narrow width such that it closes within a ground-contact surface.

The invention recited in claim 5 is a pneumatic tire for a rear wheel of a motorcycle according to claim 4, wherein the wall surface at the leading side of the land portion inclines at an angle equal to or less than 20 degrees with respect to the tire radial direction.

Next, operation of the pneumatic tire for a rear wheel of a motorcycle according to claim 5 will be explained.

The angle of the wall surface of the land portion at the leading side with respect to the tire circumferential direction is equal to or less than 20 degrees, whereby a vulcanized pneumatic tire for a rear wheel may be easily pulled out from a vulcanization mold and the pneumatic tire for a rear wheel according to the present invention can be efficiently manufactured. Further, if the angle of the wall surface of the land portion at the leading side with respect to the tire circumferential direction exceeds 20 degrees, a volume of the groove portion unnecessarily decreases. Accordingly, drainage effect is lowered, whereby a hydroplaning phenomenon is likely to occur. The wall surface of the land portion at the leading side, which does not so much affect suppression of the lifting of the land portion during driving, is not unnecessarily provided with a large angle, but preferably has an angle equal to or less than 20 degrees.

The invention recited in claim 6 is a pneumatic tire for a rear wheel of a motorcycle according to claim 4 or 5, wherein the groove width of the respective grooves arranged at the tread shoulder region is set within a range of 3-10 mm.

Next, operation of the pneumatic tire for a rear wheel of a motorcycle according to claim 6 will be explained.

The reason why the groove width of the respective grooves arranged at the tread shoulder region is set within a range of 3-10 mm is same as that of claim3. Therefore, an explanation thereon will be abbreviated.

As explained above, the pneumatic tire for a front wheel of a motorcycle according to the present invention exerts excellent advantages that turning performance on a wet road surface can be improved, and furthermore, turning performance on a dry road surface can also be improved.

Further, the pneumatic tire for a rear wheel of a motorcycle according to the present invention exerts excellent advantages that turning performance on a wet road surface can be improved, and furthermore, turning performance on a dry road surface can also be improved.

The invention further provides, according to claim 7, the use of a pneumatic tire according to any of claims 1 to 3, on the front wheel of a motorcycle. The invention further provides, according to claim 8, the use of a pneumatic tire according to any of claims 4 to 6, on the rear wheel of a motorcycle.

The invention further provides, according to claim 9, a combination of pneumatic tires for front and rear wheels of a motorcycle, characterized in that the pneumatic tire for the front wheel is according to any of claims 1-3 and the pneumatic tire for the rear wheel is according to any of claims 4 to 6.

### BRIEF DESCRIPTION OF THE DRAWINGS

[FIG. 1] FIG. 1 is a cross-sectional view along a rotational axis of a pneumatic tire for a front wheel according to a first embodiment.
[FIG. 2] FIG. 2 is a developed view of a tread of the pneumatic tire for a front wheel according to the first embodiment (in a test, Example 1).
[FIG. 3] FIG. 3 is a cross-sectional view of a land portion defined by lateral grooves of the pneumatic tire for a front wheel according to the first embodiment.
[FIG. 4] FIG. 4 is a cross-sectional view of a land portion in Conventional Example.
[FIG. 5] FIG. 5 is a cross-sectional view of a land portion in Example 2.
[FIG. 6] FIG. 6 is a cross-sectional view of a land portion in Example 3.
[FIG. 7] FIG. 7 is a developed view of a tread in Comparative Example.
[FIG. 8] FIG. 8 is a cross-sectional view of a land portion in Comparative Example.
[FIG. 9] FIG. 9 is a graph showing a result of a flat-belt test machine.
[FIG. 10] FIG. 10 is a cross-sectional view along a rotational axis of a pneumatic tire for a rear wheel according to a second embodiment.
[FIG. 11] FIG. 11 is a developed view of a tread of the pneumatic tire for a rear wheel according to the second embodiment.
[FIG. 12] FIG. 12 is a cross-sectional view of a land portion defined by inclined grooves of the pneumatic tire for a rear wheel according to the second embodiment.
[FIG. 13] FIG. 13 is a cross-sectional view of a land portion in Conventional Example.
[FIG. 14] FIG. 14 is a cross-sectional view of a land portion in Comparative Example.
[FIG. 15] FIG. 15 is a cross-sectional view of a land portion.
[FIG. 16] FIG. 16 is a cross-sectional view of a land portion.

### REFERENCE SYMBOLS

- 10: Pneumatic tire for a front wheel of a motorcycle
- 11: Pneumatic tire for a rear wheel of a motorcycle
- 28: Tread
- 50: Lateral groove
- 51: Inclined groove
- 56: Land portion
- 56H: Side wall of the land portion at a leading side
- 56K: Side wall of the land portion at a trailing side

### BEST MODE FOR CARRYING OUT THE INVENTION

### [First embodiment]

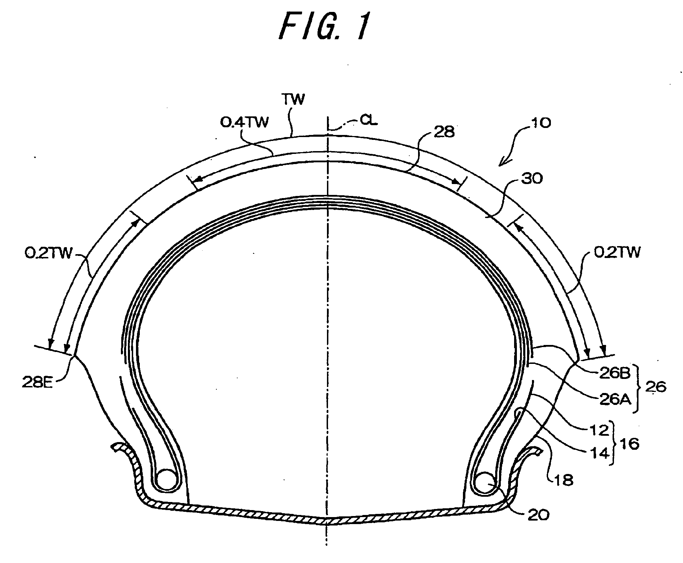

A pneumatic tire for a front wheel of a motorcycle according to a first embodiment of the present invention will be discussed with reference to FIGS. 1 to 3.

### (Carcass)

As shown in FIG. 1, a pneumatic tire for a front wheel 10 according to the present embodiment includes a carcass 16 consisting of a first carcass ply 12 and a second carcass ply 14 in which cords extending in a direction intersecting a tire equatorial plane CL is embedded. The pneumatic tire for a front wheel 10 according to the present embodiment has a tire size of 120/60R 17.

Both end portions of each of the first and second carcass plies 12 and 14 are turned around bead cores 20 embedded in bead portions 18 from an inner side to an outer side of the tire.

The first carcass ply 12 is formed by arranging the plural cords (nylon) extending in the radial direction parallelly with each other to be embedded in coated-rubber. In the present embodiment, an angle of the cord with respect to the tire equatorial plane on the tire equatorial plane is set at 80 degrees. The second carcass ply 14 is also formed by arranging the plural cords (nylon) extending in the radial direction parallelly with each other to be embedded in coated-rubber. In the present embodiment, an angle of the cord with respect to the tire equatorial plane on the tire equatorial plane is set at 80 degrees. It should be noted that the cords in the first carcass ply 12 and those in the second carcass ply 14 cross each other, and incline in a mutually opposite direction with respect to the tire equatorial plane CL. Further, in the present embodiment, although the angle of the cord is set at 80 degrees, the angle may be other angles such as 90 degrees.

### (Main cross layer)

A main cross layer 26 is placed at an external side of the carcass 16 in the tire radial direction.

The main cross layer 26 according to the present embodiment is composed of a first belt ply 26A and a second belt ply 26B.

The first belt ply 26A is formed by arranging a plurality of cords (in the present embodiment, a cord having a diameter of 0.7 mm where aromatic polyamide fibers are twisted) at a placement interval of 50 units/50 mm parallelly with each other to be embedded in coated rubber. An angle of the cord with respect to the tire equatorial plane on the tire equatorial plane is set at 33 degrees. The second belt ply 26B is also formed by arranging a plurality of cords (in the present embodiment, a cord having a diameter of 0.7 mm where aromatic polyamide fibers are twisted) at a placement interval of 50 units/50 mm parallelly with each other to be embedded in coated rubber. An angle of the cord with respect to the tire equatorial plane on the tire equatorial plane is set as 33 degrees.

The cord in the first belt ply 26A and that in the second belt ply 26B cross each other, and incline in a mutually opposite direction with respect to the tire equatorial plane CL.

Tread rubber 30 forming a tread 28 is placed at an external side of the main cross layer 26 in the tire radial direction.

It is noted that in the present embodiment, although the main cross layer 26 is composed of the two belt plies, the main cross layer 26 may be composed of three or more of the belt plies. Further, in the present embodiment, the main cross layer 26 is used for reinforcing a crown portion of the carcass 16. However, a spiral belt layer may be used which is frequently employed in a structure of a pneumatic tire for a motorcycle for high-performance of recent years.

The spiral belt layer is formed by spirally winding, for example, a lengthy rubber-coated cord where one cord is coated with unvulcanized coating rubber or a band-like ply where a plurality of cords are coated by the with unvulcanized coating rubber. A direction of the cord is substantially in a tire circumferential direction. The cord in the spiral layer may be an organic fiber cord or a steel cord.

More specifically, the spiral belt layer can be formed by embedding, in coating rubber, a cord having a diameter of 0.7 mm where aromatic polyamide fibers are twisted and spirally winding it such that its displacement interval is 50 units/50 mm.

Such spiral belt layer may be placed at an external side in the radial direction of the main cross layer 26. Alternatively, a spiral belt layer using a steel cord may be employed in placement of the main cross layer 26.

### (Tread pattern)

Given that a region of 40% of a developed width TW of the tread 28 with the tire equatorial plane CL as a center is a tread central region 28C, whereas regions as much as 20% of the developed width TW from a tread edge 28E to the tire equatorial plane side CL are tread shoulder regions 28S, grooves, each of which is set at an angle within a range of 0-30 degrees with respect to the tire equatorial plane CL, need to be arranged at the tread central region 28C, whereas grooves, each of which is set at an angle within a range of 45-90 degrees with respect to the tire equatorial plane CL, need to be arranged at the tread shoulder regions 28S. In the present embodiment, the developed width TW of the tread 28 is 155 mm, so that a width of the tread central region 28C is 62 mm, whereas a width of the tread shoulder region 28S is 31 mm.

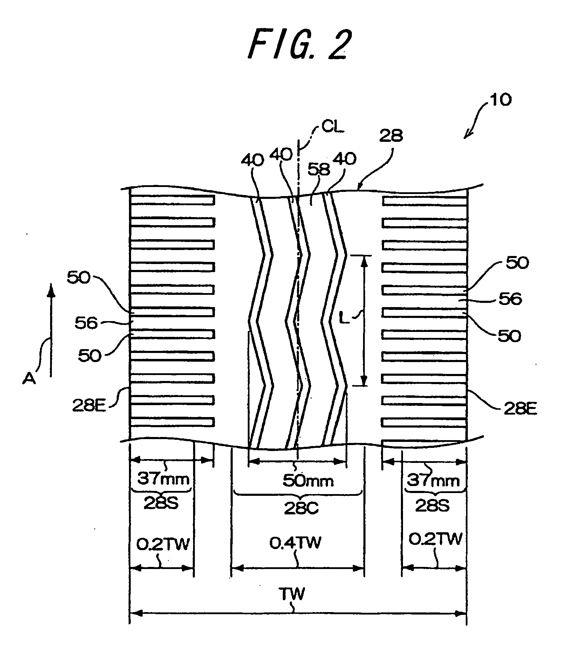

As shown in FIG. 2, circumferential main grooves 40, each of which extends in the circumferential direction in a zigzag state and has a groove width (measured at an opening portion thereof) of 5 mm, is formed on the tire equatorial plane and at both sides thereof. An angle (with respect to the tire equatorial plane CL) of one side constituting the zigzag state of the circumferential main groove 40 is 15 degrees. A wavelength L of the zigzag state is 90 mm. It is noted that a distance in the tire width direction between a left-sided end (a tip portion which becomes convex toward a left side) of the circumferential main groove 40 at a left side and a right-sided end (a tip portion which becomes convex toward a right side) of the circumferential main groove at a right side is 50 mm.

Further, the width of the groove placed at the tread shoulder region 28S is preferably set within a range of 3-10 mm. At the tread 28 according to the present embodiment, lateral grooves 50 are formed each of which extends in the tire width direction from a position spaced apart from the circumferential main groove 40 at the external side in the tire width direction to the external side in the tire width direction toward the tread edge 28E. The lateral groove 50 has a groove width of 5 mm (measured at the opening portion) and is formed to a position of 37 mm from the tread edge 28E to the tire equatorial plane side.

In the present embodiment, a width of a land portion 56 defined by the lateral grooves 50 is set at 10 mm (measured at the tread edge). Further, in the present embodiment, each groove depth of the circumferential main groove 40 and of the lateral groove 50 is 6 mm. It should be noted that an arrow A indicates a rotational direction of the pneumatic tire for a front wheel 10.

In the tread shoulder region 28S, a wall surface at a kick-out side of the land portion defined by the grooves needs to be parallel to the tire radial direction, or needs to incline toward a direction where the groove width increases from the groove bottom to the groove opening. A wall surface of the land portion at the leading side needs to incline toward a direction where the groove width increases from the groove bottom to the groove opening. Furthermore, regarding the wall surface of the land portion at the leading side, an angle of at least a portion at the leading side with respect to the tire radial direction needs to be larger than that of the wall surface of the land portion at the trailing side. At the same time, the angle with respect to the tire radial direction needs to be set within a range of 10-45 degrees. Note that the angle of the wall surface of the land portion at the leading side is preferably equal to or less than 20 degrees with respect to the tire radial direction in the case where the wall surface inclines.

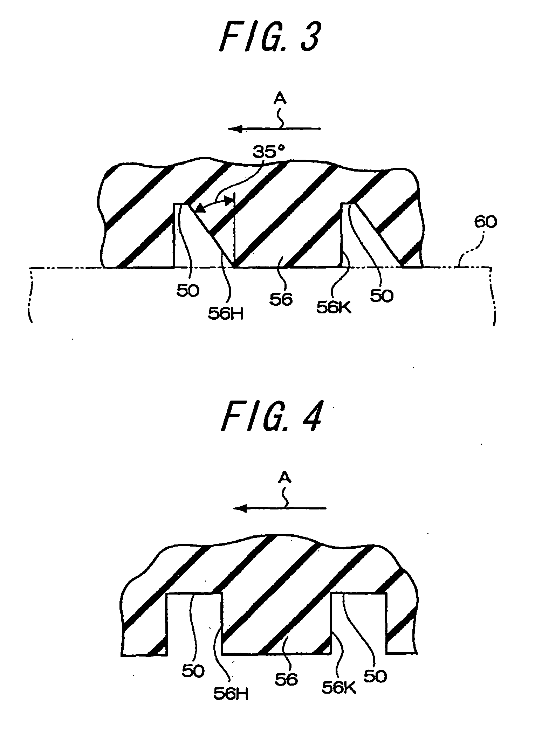

As shown in FIG. 3, in the present embodiment, a wall surface 56K at the trailing side of the land portion 56 defined by the grooves 50 is parallel to the tire radial direction. On the other hand, a wall surface 56H at the leading side of the land portion 56 inclines at a predetermined angle in a direction where the groove width increases from the groove bottom toward the groove opening. It should be noted that in the present embodiment, the wall surface 56H of the land portion inclines at an angle of 35 degrees with respect to the tire radial direction.

### (Operation)

Next, operations of the pneumatic tire for a front wheel 10 according to the present embodiment will be explained.

The pneumatic tire for a front wheel 10 according to the present embodiment is used for a front wheel of a motorcycle.

Not only when a vehicle body of the pneumatic tire for a front wheel 10 is completely in an upright position, but also when the vehicle body slightly tilts, substantially no lateral force is applied to the vehicle body, whereas back-and-forth force is predominantly applied to the vehicle body. In the pneumatic tire for a front wheel 10 according to the present embodiment, the circumferential-direction main grooves 40, each of which has an angle of equal to or less than 30 degrees with respect to the tire equatorial plane CL and is in a zigzag state, are arranged at the tread central region 28C which is the region of 40% of the developed width TW of the tread 28. Accordingly, the land portion 58 defined by the circumferential main grooves 40 extends continuously in the tire radial direction to be a pattern having sufficient strength against force in the equatorial direction, in other words, an input during braking.

Among the treads 28, it is the tread shoulder region 28 that is a region used when a vehicle body greatly tilts. The lateral grooves 50, which extend in a tire width direction, are formed at the tread shoulder region 28S, so that a pattern thereof has strength with respect to force in the lateral direction rather than force in the tire circumferential direction. Further, the side wall 56H at the leading side of the land potion 56 defined by the lateral grooves 50 inclines at a angle of 35 degrees in a direction where the groove width increases from the groove bottom toward the groove opening, and the angle with respect to the tire radial direction is larger than that of the wall surface 56K of the land portion at the trailing side. Accordingly, the tread shoulder region 28S is effective especially for shear deformation of the land portion 56in the circumferential direction when braking force affects, thereby being capable of suppressing the lifting of the land portion edge at the leading side (backward side in the traveling direction) caused by the shear deformation. This enables a contact area with a road surface 60 to be secured, and allows turning performance on a wet road surface to be improved in combination with drainage effect by means of the lateral grove 50 compared with a conventional case. In addition, on a dry road surface, turning performance can also be improved.

It should be noted that if the angle of the side wall 56H of the land portion at the leading side is equal to or less than 10 degrees, the effect against the shear deformation is too small. On the other hand, if the angle of the side wall 56H of the land portion at the leading side exceeds 45 degrees, the effect for suppressing the lifting dose not rise but hit a peak. At the same time, the groove volume of the lateral groove 50 unnecessarily decreases, leading to a decrease in drainage effect.

Further, if the groove width of the lateral groove 50 is equal to or less than 3 mm, due to the inclination of the side wall 56H of the land portion at the leading side, a sufficient width cannot be secured at the bottom of the lateral groove 50. On the other hand, if the groove width of the lateral groove 50 exceeds 10 mm, a region of the lateral groove 50 is too broad and thus an area of the land portion 56 defined by the lateral grooves 50 decreases, leading to a lack of a contact area.

### (First test of front tire)

In order to evaluate performance of the present embodiment, braking performance of a tire was evaluated by means of a flat-belt test machine in a room which will be described later.

### Tires under test will be explained below.

### (Tire in Conventional Example)

As shown in FIG. 4, each of the side wall 56H of the land potion at leading side and the side wall 56K at the trailing side was parallel to the tire radial direction.

### (Tire in Example 1)

A tire according to the above-mentioned embodiment (refer to FIG. 2).

### (Tire in Example 2)

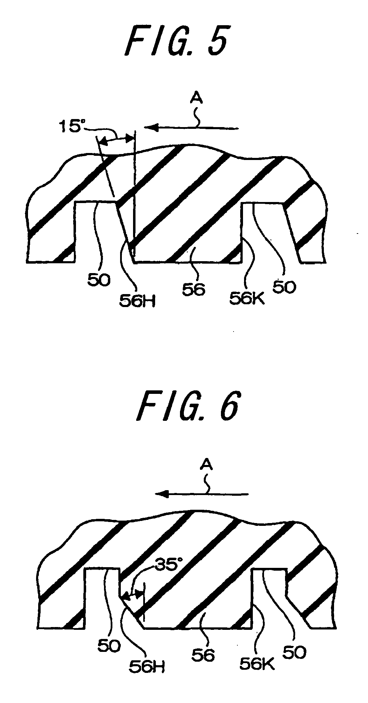

A tire whose angle of the side wall 56H of the land portion at the leading side of the tire according to the embodiment was changed to 15 degrees, as shown in FIG. 5.

### (Example 3)

A tire whose angle of the side wall 56H of the land potion at the leading side was folded back in the depth direction, as shown in FIG. 6. The side wall 56H of the land portion inclined at angle of 35 degrees from its tread surface to a position having a depth of 3 mm, and was parallel to the tire radial direction from the position having a depth of 3 mm to the groove bottom.

### (Tire in Comparative Example)

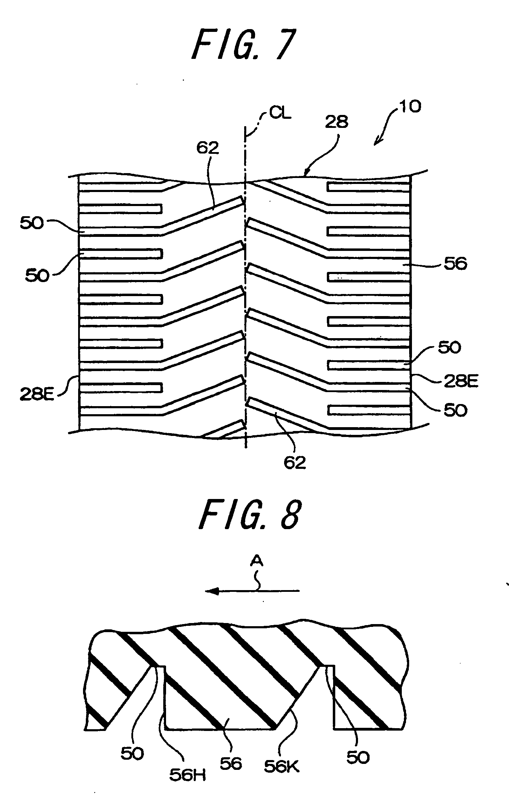

As shown in FIG. 7, inclined grooves 62 were formed in place of the circumferential main grooves 40. A tread pattern thereof was different from that in each of Conventional Example, and Examples 1-3. An angle of the inclined groove 62 relative the tire equatorial plane was 65 degrees. Note that a region between the both lateral grooves 50 was as the same negative ratio as that in each Example. Further, as shown in FIG. 8, an angle setting of the side wall 56K of the land potion at the trailing side of the land portion 56 defined by the lateral grooves 50 and that of the side wall 56H of the land potion at the leading side were in the opposite direction compared with those in Example 1.

A test method will be described below.

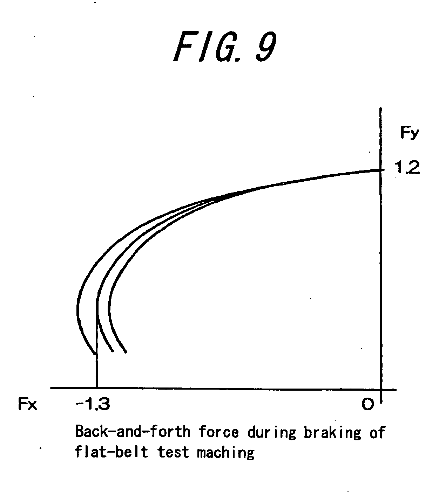

The flat-belt test machine used in the test was a machine where a belt-like thin plate composed of steel was formed into a ringed shape like a belt conveyer to be hanged over two cylinders, and then, tension was applied thereto to apply rotation force, and which measured a six-component force of the tire while at the same time pressing the tire onto a flat portion formed on an upper portion to roll the tire. The tire was pressed onto the flat portion with a camber angle of 45 degrees and a load of 1.5 kN using the flat-belt test machine to roll the tire at a speed of 50 km/h. Then, measured was lateral force Fy and back-and-forth force Fx when a slip ratio from 0% to 30% in a braking direction was applied after keeping a slip ratio 0%. FIG. 9 shows a result where a graph is depicted while defining the back-and-forth force Fx as a horizontal axis and the lateral force Fy as a longitudinal axis. A point, where the back-and-forth force Fx on the horizontal axis is "0", represents a state where the tire is fed at a slip ratio of 0%. An addition of a slip ratio to the point generates a minus component of the back-and-froth force Fx.

When the back-and-forth force Fx is generated, the lateral force Fy starts to decrease. The back-and-forth force Fx and the lateral force Fy take the form just like an eclipse. A minus minimum value of the back-and-forth force Fx at this time is considered as marginal performance of a brake. It should be noted that with regard to the flat-belt test machine, an evaluation has been performed on a dry road surface, but water has not been sprayed.

Test results will be shown as follows.

It is noted that regarding the results, a marginal value (negative minimum value of the back-and-forth force Fx) in Conventional Example was -1.32N and defined as an index of 100, marginal values on other tires are shown as following. It should be noted that the table represents that the larger a numerical number of the index is, the better performance is exerted.

**[Table 1]**

| | Evaluation (index) |
|---|---|
| Conventional Example | 100 |
| Example 1 | 105.4 |
| Example 2 | 102.7 |
| Example 3 | 103.1 |
| Comparative Example | 100.5 |

Comparative Example has been slightly improved in the marginal performance of a brake relative to Conventional Example. However, the result of Comparative Example has been substantially same as that in Conventional Example (the reason why is that the tread shoulder region has been used, and in the tread shoulder region, each angle of the side surface 56H of the land portion at the leading side of the land portion has been same).

Each of the tires in Examples 1-3 has been improved in the marginal performance of a brake by approximately 3-5% compared with that in Conventional Example.

### (Second test of front tire)

A comparison test of steering performance has been performed on a wet road surface using an actual vehicle in order to confirm effects from an improvement in wet performance. The result will be explained below. Prepared were tires under test for a front wheel (same tires as those used in the first test of a front tire). A test using an actual vehicle has been performed after replacing only front tires. Rear tires were fixed using conventional tires at all times.

For the test, considerably severe (nearly marginal) running tests using an actual vehicle were performed at a test course on a drizzling day while mounting the tire under test onto front wheels of a sports-type motorcycle of 1000cc. The amount of rain was stable all day long. It was evenly in a wet state at all times. For each tire, four-lap run was performed at the test course, and thereafter, an average lap time was obtained. Further, steering stability performance under a wet condition was comprehensively evaluated through a feeling of a professional test rider at the same time by means of a ten-score method. Furthermore, the result will be also shown with an attachment of a comment on the evaluation from the test rider. Further, in order to confirm steering stability also under a dry condition, a comment on an average lap time of the same four laps, which has been heard from the rider after the rider had run at the test course on another fine day, will be attached therewith.

The test results are as follows.

### (Tire in Conventional Example)

Lap time under a wet condition: 53.7 seconds
Rating on a run under a wet condition: Six scores

The rider provided the comment (on a wet road surface) to the effect that when a brake was applied during a straight drive and a vehicle body was in an upright position, the tire exhibited a good feeling; however, when a brake was applied while the vehicle body was tilted, the tire revealed weakness at a tread; and its limit seemed to be low.
Lap time under a dry condition: 45.7 seconds
Rating on a run under a dry condition: Six scores

The rider provided the comment (on a dry road surface) to the effect that when a brake was applied while the vehicle body was tilted, the tire revealed weakness at the tread.

### (Tire in Example 1)

Lap time under a wet condition: 52.7 seconds
Rating on a run under a wet condition: Eight scores

The rider provided the comment (on a wet road surface) to the effect that the tire dramatically improved in its braking performance; good grip performance was exerted; however, when this tire was run at a portion having a deep puddle, it tended to cause a little bit of a hydroplaning.
Lap time under a dry condition: 44.1 seconds
Rating on a run under a dry condition: Nine scores

The rider provided the comment (on a dry road surface) to the effect that a brake could be firmly applied to the tire; the tire had high braking performance; and the tire was excellent.

### (Tire in Example 2)

Lap time under a wet condition: 52.4 seconds
Rating on a run under a wet condition: Nine scores

The rider provided the comment (on a wet road surface) to the effect that braking performance was better than that in Conventional Example; a hydroplaning was hard to occur on a puddle compared with Example 1.
Lap time under a dry condition: 45.0 seconds
Rating on a run under a dry condition: Eight scores

The rider provided the comment (on a dry road surface) to the effect that braking performance was better than that in Conventional Example, but was beneath that in Example 1.

### (Tire in Example 3)

Lap time under a wet condition: 52.3 seconds
Rating on a run under a wet condition: Nine scores

The rider provided the comment (on a wet road surface) to the effect that braking performance was better than that in Conventional Example and a hydroplaning was hard to occur on a puddle compared with Example 1.
Lap time under a dry condition: 45.1 seconds
Rating on a run under a dry condition: Eight scores

The rider provided the comment (on a dry road surface) to the effect that braking performance was better than that in Conventional Example, but was beneath that in Example 1.

### (Tire in Comparative Example)

Lap time under a wet condition: 54.7 seconds
Rating on a run under a wet condition: Four scores

The rider provided the comment to the effect that when a brake was applied during a straight drive, the tire revealed significant weakness at the tread, and the motorcycle seemed not to stop its running; and during braking while the vehicle body was titled, its limit seemed to be low.

### Verification of effects

As described above, even on a wet road surface, the effects from the present invention were verified.

A hydroplaning phenomenon occurred in each of Examples 1 and 3. When the side wall of the land portion is provided with too large angle, a volume of the groove decreases, thereby lowering drainage effect. Accordingly, the tire is likely to slip at a puddle having deep water depth. From a comparison of Examples 1 and 2, Example 1 has superiority in leaning of the land portion. However, in drainage performance, Example 2 has superiority. With regard to wet performance, it could be understood that a tire needs to be designed both in terms of the angle of the side wall of the land portion and the drainage performance.

Example 2 had the substantially same performance as Example 3. However, in dry performance, Example 1 provided with the angle at the side wall of the land potion has superiority over Examples 1 and 2.

From a comparison of Example 1 with Comparative Example, it would be apparent that it might be meaningless to provide an angle, which functions effectively relative to a brake, with an angle like the present invention. Further, from a comparison with Comparative Example, it could be understood that it is effective to place a groove along an equatorial direction as one to be placed at a central portion.

### [Second embodiment]

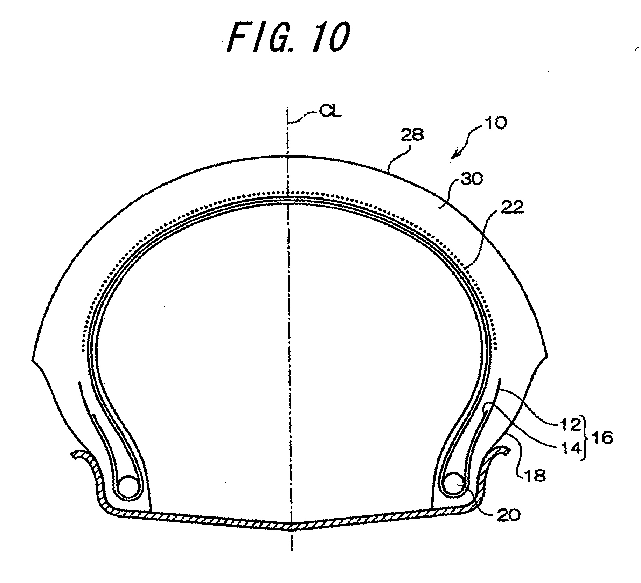

Next, o a pneumatic tire for a rear wheel of a motorcycle according to one embodiment of the present invention will be explained with reference to FIGS. 10 to 12. It should be noted that the same numeral references are attached to the same configurations as those in the first embodiment, and its explanation will be abbreviated.

A pneumatic tire for a rear wheel 11 according to the preset embodiment has a tire size of 190/50ZR17.

As shown in FIG. 10, in the pneumatic tire for a rear wheel 11, a spiral belt layer 22 is placed at an external side in the tire radial direction of the carcass 16.

The spiral belt layer 22 according to the present embodiment is formed by spirally winding a lengthy rubber-coated cord, where cords in each of which two steel single-lines having a diameter of 0.3 mm are twisted each other coated by unvulcanized coating rubber, at a displacement interval of 70 units/50 mm. Note that at the external side in a tire radial direction of the carcass 16, the main cross layer does not exist, but only the spiral belt layer 22 is placed.

### (Tread pattern)

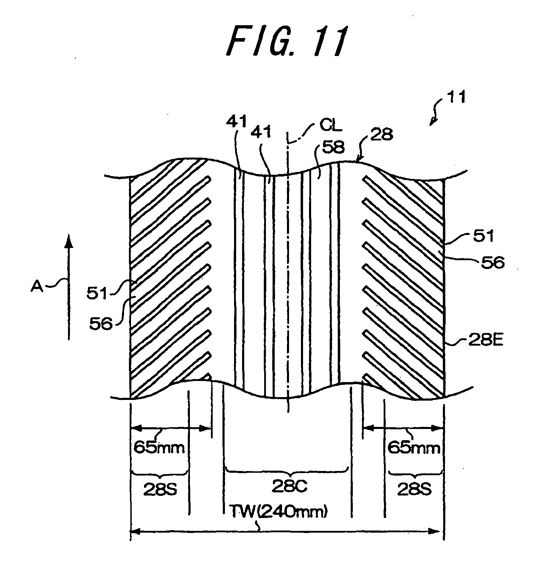

As shown in FIG. 11, at the tread 28, two circumferential main groves 41, each of which linearly extends in a circumferential direction and has a groove width of 7mm, are formed at both sides of the tire equatorial plane CL. Furthermore, at the tread 28, inclined grooves 51 are formed each of which extends from a position spaced apart from the circumferential main groove 41 at an external side in a tire width direction to an external side in a tire width direction toward the tread edge 28E and has a groove width of 3.5mm.

The developed width TW of the tread 28 according to the present embodiment is 240 mm. The inclined groove 51 is formed within a range of 65 mm from the tread edge 28E to the tire equatorial plane side. The inclined groove 51 inclined such that its tire equatorial plane side is in the tire rotational direction side (an arrow A direction side) compared with the tread edge side. An angle of the tread inclined groove 51 with respect to a tire circumferential direction is 60 degrees.

A width of the land portion 56 defined by the inclined grooves 51 is 10 mm at the tread edge 28E in the present embodiment. Further, each groove depth of the circumferential-direction main groove 41 and the inclined groove 51 s 6 mm in the present embodiment.

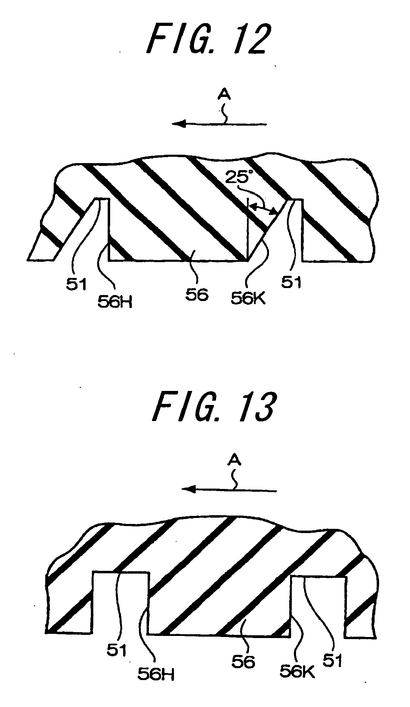

As shown in FIG. 12, in the present embodiment, the wall surface 56H of the land portion at the leading side of the land portion 56 defined by the inclined grooves 51 is parallel to a tire radial direction. On the other hand, the wall surface 56K of the land portion at the trailing side of the land portion 56 inclines at a predetermined angle in a direction where a groove width expands from a groove bottom toward a groove opening. Note that, in the present embodiment, the wall surface 56K of the land portion inclines at an angle of 35 degrees with respect to a tire radial direction.

### (Operation)

Next, operations of the pneumatic tire for a rear wheel 11 according to the present embodiment will be explained.

The pneumatic tire for a rear wheel 11 according to the present embodiment is used for a rear wheel of a motorcycle.

Not only when a vehicle body of the pneumatic tire for a rear wheel 11 is completely in a upright position, but also when the vehicle body slightly tilts, substantially no lateral force is applied to the vehicle body, whereas back-and-forth force is predominantly applied to the vehicle body. In the pneumatic tire for a rear wheel 11 according to the present embodiment, the circumferential-direction main grooves 41, which linearly extend along the tire equatorial plane CL, are arranged at the tread central region 28C that is the region of 40% of the developed width TW of the tread 28. Accordingly, the land portion 58 defined by the circumferential main grooves 41 extends continuously in the tire radial direction to be a pattern having sufficient strength against force in the equatorial direction, in other words, an input during traction.

Among the treads 28, it is the tread shoulder region 28 that is a region used when a vehicle body is greatly tilted. At this tread shoulder region 28S, the inclined groove 51, which inclines such that it's the tire equatorial plane side faces the tire rotational direction side (the arrow A direction side) compared with the tread edge side, is formed, so that a pattern thereof has strength against force in the circumferential direction (traction) and force in the lateral direction.

Further, the side wall 56K of the land portion at the trailing side of the land potion 56 defined by the inclined grooves 50 inclines at an angle of 35 degrees in a direction where the groove width increases from the groove bottom toward the groove opening, and the angle with respect to the tire radial direction is set larger than that of wall surface 56H of the land portion at the leading side, thereby becoming effective especially for leaning deformation in the circumferential direction of the land portion 56 when traction affects. Accordingly, the lifting of the land portion edge at the trailing side attributable to the tilting deformation can be suppressed. This enables a contact area with a road surface to be secured, and allows turning performance on a wet road surface to be improved in combination with drainage effect by means of the inclined grove 50 compared with a conventional tire. In addition, on a dry road surface, turning performance can also be improved.

It should be noted that when the angle of the sidewall 56K of the land portion at the trailing side is equal to or less than 10 degrees, the effect against the leaning deformation is too small. On the other hand, when the angle of the side wall 56K of the land portion at the trailing side exceeds 45 degrees, the effect for suppressing the lifting dose not rise but hit a peak. At the same time, groove volume of the inclined groove 51 unnecessarily decrease, leading to a decrease in drainage effect.

Further, when the groove width of the inclined groove 51 is equal to or less than 3mm, due to the inclination of the side wall 56K of the land portion at the trailing side, a sufficient width cannot be secured at the bottom of the inclined groove 51. On the other hand, when the groove width of the inclined groove 51 exceeds 10 mm, a region of the inclined groove 51 is too broad and thus an area of the land portion 56 defined by the inclined grooves 50 decreases, leading to a lack of a contact area.

### (Test of rear tire)

A comparison test of steering performance has been performed on a wet road surface using an actual vehicle in order to confirm effects from an improvement in performance. The result will be explained below. Prepared were tires under test for a rear wheel. The test using an actual vehicle was performed after only rear tires were replaced with. Front tires were fixed using conventional tires at all times.

For the test, considerably severe (nearly marginal) run using an actual vehicle were performed at a test course on a drizzling day while mounting the tire under test onto rear wheels of a sports-type motorcycle of 1000cc. The amount of rain was stable all day long. It was evenly in a wet state at all times. For each tire, four-lap run was performed at the test course, and thereafter, an average lap time was obtained. Note that each central portion of the tires had the same pattern, so that it was in turning performance at a corner that a difference occurred. Further, steering stability performance under a wet condition was comprehensively evaluated through a feeling of a professional test rider at the same time by means of a ten-score method. Furthermore, the result will also be shown with an attachment of a comment on the evaluation from the test rider.

First, tires under test will be explained.

### (Tire in Example)

This tire was the above-mentioned tire according to the second embodiment, which had the pattern in FIG. 11 and a cross-sectional shape of the land portion in FIG. 12 (the side wall 56K of the land portion) at the trailing side at a shoulder side inclines at an angle of 25 degrees relative to the tire radial direction, and the side wall 56H of the land portion at the leading side is parallel to the tire radial direction).

### (Tire in Conventional Example)

This tire has the same pattern as that in Example. However, as shown in FIG. 13, a cross-sectional shape of the land portion 56 defined by the inclined grooves 51 was different from that in Example. Both the side wall 56K of the land portion at the trailing side at the shoulder side and the side wall 56H of the land portion at the leading side were parallel to the tire radial direction (perpendicular to the tread surface).

### (Tire in Comparative Example)

This tire was the above-mentioned tire according to the second embodiment except that it has the pattern in FIG. 11 and a cross-sectional shape of the land portion in FIG. 12 (the side wall 56K of the land portion at the trailing side in a shoulder side inclines at an angle of 25 degrees relative to the tire radial direction, and the side wall 56H of the land portion at the leading side was parallel to a tire radial direction).

### (Tire in Conventional Example)

This tire was the same pattern as that in Example, expect that, as shown in FIG. 14, a cross-sectional shape of the land portion 56 defined by the inclined grooves 51 was different from that in Example. The side wall 56K at the trailing side in a shoulder side was parallel to the tire radial direction. The side wall 56H of the land portion at the leading side inclined at an angle of 25 degrees relative to a tire radial direction. In other words, its cross-sectional shape was opposite to that in Example.

The test results are as follows.

### (Tire in Conventional Example)

Lap time under a wet condition: 53.7 seconds
Rating on a run under a wet condition: Six scores

The rider provided the comment to the effect that the tire was likely to slip during traction; the tread tended to move due to traction especially from a state where the vehicle body was tilted to a great extent; the tire was prone to slip, and seemed to have the necessity to be cautiously operated when an throttle was opened.

### (Tire in Comparative Example)

Lap time under a wet condition: 54.1 seconds
Rating on a run under a wet condition: Five scores

The rider provided the comment to the effect that similarly to Conventional Example, the tire was likely to slip.

### (Tire in Example)

Lap time under a wet condition: 52.1 seconds
Rating on a run under a wet condition: Eight scores

The rider provided the comment to the effect that traction could be firmly applied to the tire and when the throttle was opened without any hesitation, the tire kept its stability.

Verification of effects. Example had the obviously higher steering stability performance (traction) under a wet condition than that in Conventional Example. Further, the tire in Comparative Example prepared for the comparison did not have much difference in traction performance compared with Conventional Example. A difference in an inclination direction of the side wall of the land portion gave rise to these results.

Confirmed was that the tire in Example having the present invention significantly improved in its steering stability performance under a wet condition from a comparison with the tires in Conventional Example and Comparative Example.

### [Another embodiment]

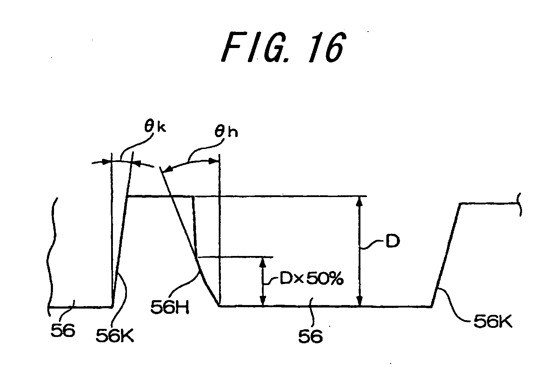

It should be noted that the sidewall 56H of the land portion at the leading side of the pneumatic tire for a front wheel 10 may generally incline at a predetermined angle as shown in FIG. 3; may be folded back one time halfway as shown in FIG. 6; may be folded back plural times, although not shown; and further, may be curved. Here, as shown in FIG. 16, given that groove depth (equals to height of the land portion) is defined as "D", it is required to set an average inclination angle θh as much as 50% of D from the tread surface to the groove bottom side in the side wall 56H of the land portion larger than an inclination angle (average value from the groove bottom to the stamping surface) θk of the sidewall 56K of the land portion at the trailing side. Further, the inclination angle θh is preferably set by equal to or more than 10 degrees larger than the inclination angle θk, and more preferably, set by equal to or more than 20 degrees. The angle from a position of 50% of D, which is from the road surface toward the groove bottom, to the groove bottom may be equal to or more than 0 degree relative to a tire radial direction. Note that the setting of the inclination angle should be naturally performed to the side wall of the land portion of the pneumatic tire for a rear wheel 10 based on a technical concept same as that of the pneumatic tire for a front wheel 10 (a direction of each inclination angle of the side wall 56H of the land portion and of the side wall 56K of the land portion is opposite to that of the pneumatic tire for a front wheel 10).

### INDUSTRIAL APPLICABILITY

As discussed above, a pneumatic tire for a front wheel of a motorcycle according to the present invention is capable of improving turning performance on a wet road surface, and further, is capable of improving turning performance also on a dry road surface.

Further, a pneumatic tire for a rear wheel of a motorcycle according to the present invention is capable of improving turning performance on a wet road surface, and further, is capable of improving turning performance also on a dry road surface.

## Claims

1. A pneumatic tire (10) for a front wheel of a motorcycle having a plurality of land portions (56, 58) defined by a plurality of grooves (40,50) at a tread, wherein
a tread central region extends across a width of 40% of a developed width of the tread (28) with a tire equatorial plane (CL) being as its center, and a tread shoulder region extends from an edge portion of the tread toward the tire equatorial plane side across a width of 20% of the developed width,
the tread central region is provided with grooves (40) each having an angle set within a range of 0-30 degrees relative to the tire equatorial plane (CL),
the tread shoulder region is provided with grooves (50) each having an angle set within a range of 45-90 degrees relative to the tire equatorial plane (CL), **characterized in that**
at the tread shoulder region, a wall surface (56K) at a trailing side of a land portion (56) defined by the grooves (50) is parallel to a tire radial direction, or inclines in a direction such that a groove width increases from a groove bottom toward a groove opening; a wall surface (56H) at a leading side of the land portion (56) inclines in a direction such that a groove width increases from the groove bottom toward the groove opening, and at least a portion at a tread surface side has a larger angle with respect to a tire radial direction than an angle of the wall surface at the trailing side and an angle with respect to a tire radial direction within a range of 10-45 degrees.

2. The pneumatic tire (10) for a front wheel of a motorcycle according to claim 1, wherein the wall surface (56K) at the trailing side of the land portion (56) inclines at an angle equal to or less than 20 degrees with respect to the tire radial direction.

3. The pneumatic tire (10) for a front wheel of a motorcycle according to claim 1 or 2, wherein the groove width of the respective grooves (50) arranged at the tread shoulder region is within a range of 3-10 mm.

4. A pneumatic tire (11) for a rear wheel of a motorcycle having a plurality of land portions (56, 58) defined by a plurality of grooves (41, 51) at a tread (28), wherein
a tread central region extends across a width of 40% of a developed width of the tread (28) with a tire equatorial plane (CL) being as its center, and a tread shoulder region extends from an edge portion of the tread toward the tire equatorial plane side across a width of 20% of the developed width,
the tread central region is provided with grooves (41) each having an angle set within a range of 0-30 degrees relative to the tire equatorial plane (CL),
the tread shoulder region is provided with grooves (51) each having an angle set within a range of 45-90 degrees relative to the tire equatorial plane (CL), **characterised in that**
at the tread shoulder region, a wall surface (56H) at a leading side of the land portion (56) defined by the grooves (51) is parallel to a tire radial direction, or inclines in a direction such that a groove width increases from a groove bottom toward a groove opening; a wall surface (56K) at a trailing side of the land portion (56) inclines in a direction such that a groove width increases from the groove bottom toward the groove opening; and at least a portion at a tread surface side has a larger angle with respect to a tire radial direction than an angle of the wall surface at the leading side, and an angle with respect to a tire radial direction within a range of 10-45 degrees.

5. The pneumatic tire (11) for a rear wheel of a motorcycle according to claim 4, wherein the wall surface (56H) at the leading side of the land portion (56) inclines at an angle equal to or less than 20 degrees with respect to a tire radial direction.

6. The pneumatic (11) tire for a rear wheel of a motorcycle according to claim 4 or 5, wherein the groove width of the respective grooves (51) arranged at the tread shoulder region is set within a range of 3-10 mm.

7. Use of a pneumatic tire according to any of claims 1 to 3, on the front wheel of a motorcycle.

8. Use of a pneumatic tire according to any of claims 4 to 6, on the rear wheel of a motorcycle.

9. A combination of pneumatic tires for front and rear wheels of a motorcycle, **characterised in that** the pneumatic tire for the front wheel is according to any of claims 1-3 and the pneumatic tire for the rear wheel is according to any of claims 4 to 6.

## Patentansprüche

1. Luftreifen (10) für ein Vorderrad eines Motorrades mit einer Vielzahl von Stegabschnitten (56, 58), die durch eine Vielzahl von Rillen (40, 50) in einer Lauffläche definiert werden, wobei
sich ein Laufflächenmittelbereich über eine Breite von 40 % der abgewickelten Breite der Lauffläche (28) mit einer Reifenäquatorebene (CL) als seine Mitte erstreckt, und wobei sich ein Laufflächenschulterbereich von einem Randabschnitt der Lauffläche in Richtung der Seite der Reifenäquatorebene über eine Breite von 20 % der abgewickelten Breite erstreckt,
der Laufflächenmittelbereich mit Rillen (40) bereitgestellt wird, die jeweils einen Winkel aufweisen, der innerhalb eines Bereiches von 0-30 Grad relativ zur Reifenäquatorebene (CL) eingestellt ist,
der Lairfflächensehulterbereich mit Rillen (50) bereitgestellt wird, die jeweils einen Winkel aufweisen, der innerhalb eines Bereiches von 45-90 Grad relativ zur Reifenäquatorebene (CL) eingestellt ist, **dadurch gekennzeichnet, dass**
im Laufflächenschulterbereich eine Wandfläche (56K) an einer Hinterseite eines Stegabschnittes (56), der durch die Rillen (50) definiert wird, parallel zu einer radialen Richtung des Reifens verläuft oder sich in einer Richtung so neigt, dass eine Rillenbreite von einem Rillenboden in Richtung einer Rillenöffnung größer wird; sich eine Wandfläche (56H) an einer Vorderseite des Stegabschnittes (56) in einer Richtung neigt, so dass eine Rillenbreite vom Rillenboden in Richtung der Rillenöffnung größer wird; und mindestens ein Abschnitt auf der Laufflächenseite einen größeren Winkel mit Bezugnahme auf eine radiale Richtung des Reifens aufweist als ein Winkel der Wandfläche an der Hinterseite und einen Winkel mit Bezugnahme auf die radiale Richtung des Reifens innerhalb eines Bereiches von 10-45 Grad.

2. Luftreifen (10) für ein Vorderrad eines Motorrades nach Anspruch 1, bei dem sich die Wandfläche (56K) an der Hinterseite des Stegabschnittes (56) unter einem Winkel gleich oder kleiner als 20 Grad mit Bezugnahme auf eine radiale Richtung des Reifens neigt.

3. Luftreifen (10) für ein Vorderrad eines Motorrades nach Anspruch 1 oder 2, bei dem die Rillenbreite der jeweiligen Rillen (50), die im Laufflächenschulterbereich angeordnet sind, innerhalb eines Bereiches von 3-10 mm liegt.

4. Luftreifen (11) für ein Hinterrad eines Motorrades mit einer Vielzahl von Stegabschnitten (56, 58), die durch eine Vielzahl von Rillen (41, 51) in einer Lauffläche (28) definiert werden, wobei
sich ein Laufflächenmittelbereich über eine Breite von 40 % der abgewickelten Breite der Lauffläche (28) mit einer Reifenäquatorebene (CL) als seine Mitte erstreckt, und wobei sich ein Laufflächenschulterbereich von einem Randabschnitt der Lauffläche in Richtung der Seite der Reifenäquatorebene über eine Breite von 20 % der abgewickelten Breite erstreckt,
der Laufflächenmittelbereich mit Rillen (41) bereitgestellt wird, die jeweils einen Winkel aufweisen, der innerhalb eines Bereiches von 0-30 Grad relativ zur Reifenäquatorebene (CL) eingestellt ist,
der Laufflächenschulterbereich mit Rillen (51) bereitgestellt wird, die jeweils einen Winkel aufweisen, der innerhalb eines Bereiches von 45-90 Grad relativ zur Reifenäquatorebene (CL) eingestellt,ist, **dadurch gekennzeichnet, dass**
im Laufflächenschulterbereich eine Wandfläche (56H) an einer Vorderseite des Stegabschnittes (56), der durch die Rillen (51) definiert wird, parallel zu einer radialen Richtung des Reifens verläuft oder sich in einer Richtung so neigt, dass eine Rillenbreite von einem Rillenboden in Richtung einer Rillenöffnung größer wird; sich eine Wandfläche (56K) an einer Hinterseite des Stegabschnittes (56) in einer Richtung neigt, so dass eine Rillenbreite vom Rillenboden in Richtung der Rillenöffnung größer wird; und mindestens ein Abschnitt auf der Laufflächenseite einen größeren Winkel mit Bezugnahme auf eine radiale Richtung des Reifens aufweist als ein Winkel der Wandfläche an der Vorderseite und einen Winkel mit Bezugnahme auf die radiale Richtung des Reifens innerhalb eines Bereiches von 10-45 Grad.

5. Luftreifen (11) für ein Hinterrad eines Motorrades nach Anspruch 4, bei dem sich die Wandfläche (56H) an der Vorderseite des Stegabschnittes (56) unter einem Winkel gleich oder kleiner als 20 Grad mit Bezugnahme auf eine radiale Richtung des Reifens neigt.

6. Luftreifen (11) für ein Hinterrad eines Motorrades nach Anspruch 4 oder 5, bei dem die Rillenbreite der jeweiligen Rillen (51), die im Laufflächenschulterbereich angeordnet sind, innerhalb eines Bereiches von 3-10 mm liegt.

7. Verwendung eines Luftreifens nach einem der Ansprüche 1 bis 3 auf dem Vorderrad eines Motorrades.

8. Verwendung eines Luftreifens nach einem der Ansprüche 4 bis 6 auf dem Hinterrad eines Motorrades.

9. Kombination von Luftreifen für das Vorder- und Hinterrad eines Motorrades, **dadurch gekennzeichnet, dass** der Luftreifen für das Vorderrad nach einem der Ansprüche 1 bis 3 und der Luftreifen für das Hinterrad nach einem der Ansprüche 4 bis 6 ausgeführt ist.

## Revendications

1. Bandage pneumatique (10) pour une mue avant d'un motocycle, comportant plusieurs parties d'appui (56, 58) définies par plusieurs rainures (40, 50) au niveau d'une bande de roulement, dans lequel :
une région centrale de la bande de roulement s'étend à travers une largeur représentant 40% d'une largeur développée de la bande de roulement (28), son centre étant constitué par un plan équatorial du bandage pneumatique (CL), et une région d'épaulement de la bande de roulement s'étendant d'une partie de bordure de la bande de roulement vers le côté du plan équatorial du bandage pneumatique, à travers une largeur représentant 20% de la largeur développée ;
la région centrale de la bande de roulement comporte des rainures (40), formant chacune un angle compris dans un intervalle de 0 à 30 degrés par rapport au plan équatorial du bandage pneumatique (CL) ;
la région d'épaulement de la, bande de roulement comporte des rainures (50), formant chacune un angle compris dans un intervalle de 45 à 90 degrés par rapport au plan équatorial du bandage pneumatique (CL), **caractérisé en ce que** :
dans la région d'épaulement de la bande de roulement, une surface de paroi (56K) au niveau d'un côté arrière d'une partie d'appui (56) définie par les rainures (50), est parallèle à une direction radiale du bandage pneumatique, ou est inclinée dans une direction telle qu'une largeur de rainure est accrue d'un fond de la rainure vers une ouverture de la rainure ; une surface de paroi (56H) au niveau d'un côté avant de la partie d'appui (56) étant inclinée dans une direction telle qu'une largeur de rainure est accrue du fond de la rainure vers l'ouverture de la rainure, au moins une partie au niveau d'un côté de la surface de la bande de roulement formant par rapport à une direction radiale du bandage pneumatique un angle plus grand qu'un angle de la surface de paroi au niveau du côté arrière et qu'un angle par rapport à une direction radiale du bandage pneumatique, compris dans un intervalle allant de 10 à 45 degrés.

2. Bandage pneumatique (10) pour une roue avant d'un motocycle selon la revendication 1, dans lequel la surface de paroi (56K) au niveau du côté arrière de la partie d'appui (56) est inclinée à un angle égal ou inférieur à 20 degrés par rapport à la direction radiale du bandage pneumatique.

3. Bandage pneumatique (10) pour une roue avant d'un motocycle selon les revendications 1 ou 2, dans lequel la largeur de rainure des rainures respectives (50) agencées au niveau de la région de l'épaulement de la bande de roulement est comprise dans un intervalle allant de 3 à 10 mm.

4. Bandage pneumatique (11) pour une roue arrière d'un motocycle, comportant plusieurs parties d'appui (56, 58) définies par plusieurs rainures (41, 51) au niveau d'une bande de roulement (28), dans lequel :
une région centrale de la bande de roulement s'étend à travers une largeur représentant 40% d'une largeur développée de la bande de roulement (28), son centre étant constitué par un plan équatorial du bandage pneumatique (CL), et une région d'épaulement de la bande de roulement s'étendant d'une partie de bordure de la bande de roulement vers le côté du plan équatorial du bandage pneumatique, à travers une largeur représentant 20% de la largeur développée ;
la région centrale de la bande de roulement comporte des rainures (41), formant chacune un angle compris dans un intervalle de 0 à 30 degrés par rapport au plan équatorial du bandage pneumatique (CL) ;
la région d'épaulement de la bande de roulement comporte des rainures (51), formant chacune un angle compris dans un intervalle de 45 à 90 degrés par rapport au plan équatorial du bandage pneumatique (c) ; **caractérisé en ce que** :
dans la région d'épaulement de la bande de roulement, une surface de paroi (56H) au niveau d'un côté avant de la partie d'appui (56) définie par les rainures (51) est parallèle à une direction radiale du bandage pneumatique, ou est inclinée dans une direction telle qu'une largeur de rainure est accrue d'un fond de la rainure vers une ouverture de la rainure ; une surface de paroi (56K) au niveau d'un côté arrière de la partie d'appui (56) étant inclinée d'ans une direction telle qu'une largeur de rainure est accrue du fond de la rainure vers l'ouverture de la rainure ; et au moins une partie au niveau d'un côté de la surface de la bande de roulement formant par rapport à une direction radiale du bandage pneumatique un angle plus grand qu'un angle de la surface de paroi au niveau du côté avant, et qu'un angle par rapport à une direction radiale du bandage pneumatique, compris dans un intervalle allant de 10 à 45 degrés.

5. Bandage pneumatique (11) pour une roue arrière d'un motocycle selon la revendication 4, dans lequel la surface de paroi (56H) au niveau du côté avant de la partie d'appui (56) est inclinée à un angle égal ou inférieur à 20 degrés par rapport à une direction radiale du bandage pneumatique.

6. Bandage pneumatique (11) pour une roue arrière d'un motocycle selon les revendications 4 ou 5, dans lequel la largeur de rainure des rainures respectives (51) agencées au niveau de la région d'épaulement de la bande de roulement est comprise dans un intervalle allant de 3 à 10 mm.

7. Utilisation d'un bandage pneumatique selon l'une quelconque des revendications 1 à 3, sur la roue avant d'un motocycle.

8. Utilisation d'un bandage pneumatique selon l'une quelconque des revendications 4 à 6, sur la roue arrière d'un motocycle.

9. Combinaison de bandages pneumatiques pour les roues avant et arrière d'un motocycle, **caractérisée en ce que** le bandage pneumatique pour la roue avant est conforme à l'une quelconque des revendications 1 à 3, le bandage pneumatique pour la roue arrière étant conforme à l'une quelconque des revendications 4 à 6.
